# EUROPÄISCHE PATENTSCHRIFT

(11) **EP 2 123 579 B1**
(45) Veröffentlichungstag und Bekanntmachung des Hinweises auf die Patenterteilung: **06.06.2012**
(21) Anmeldenummer: 09005030.3
(22) Anmeldetag: 04.04.2009
(51) Int. Cl.: B65G 15/62, B65G 15/64, B65G 47/51, B65G 47/68

(54) **Vorrichtung zur Ablenkung eines Stückgutstromes aus einer Förderstrecke**
Device for deflecting a flow of articles from a conveying section
Dispositif de déviation d'un flux de produits vrac à partir d'une trajectoire de transport

(30) Priorität: 21.05.2008 DE 202008006900 U
(43) Veröffentlichungstag der Anmeldung: 25.11.2009
(73) Patentinhaber: TRANSNORM SYSTEM GmbH, 31177 Harsum (DE)
(72) Erfinder: Ventz, Kai, 31139 Hildesheim (DE)
(74) Vertreter: Siekmann, Gunnar

(56) Entgegenhaltungen:
- EP-A- 1 123 884
- WO-A-02/072454
- DE-U1- 9 407 313
- FR-A- 2 583 394

## Beschreibung

Die Erfindung bezieht sich auf eine Vorrichtung zur Ablenkung eines Stückgutstromes aus einer Förderstrecke mit mehreren, in einer Ebene nebeneinander fördernden Gurtbandförderern, die im Ablenkbereich in einem vorbestimmten Winkel zur Förderrichtung der Förderstrecke angeordnet sind.

Eine Vorrichtung gemäß den Oberbegriff Anspruchs 1 ist aus FR-A-2503394 bekannt. Andere solche Vorrichtungen sind aus WO 02/072454, EP-A-1123884 und DE 94073134 bekannt.

Bei einem Gurtbandförderer können einzelne Teile der geförderten, stückigen Produkte gelegentlich unter das Gurtband geraten. Dies kommt insbesondere dann häufiger vor, wenn der Stückgutstrom aus einer Förderstrecke seitlich abgelenkt wird, z.B. um einen Teilstrom der geförderten Produkte aus dem Hauptstrom, der Förderstrecke, abzuzweigen oder zwei Produkt-Teilströme miteinander zu vereinen.

Der Erfindung liegt die Aufgabe zugrunde, eine Vorrichtung zur Ablenkung eines Stückgutstromes aus einer Förderstrecke so zu gestalten, dass das geförderte Produkt nicht mehr unter das Gurtband geraten kann.

Diese Aufgabe ist durch die Merkmale des Schutzanspruchs 1 gelöst.

Weiterbildungen und vorteilhafte Ausgestaltungen ergeben sich aus den Unteransprüchen 2 bis 5.

Dadurch, dass jeder Gurtbandförderer im Laufbereich des fördernden Abschnitts, des Fördertrums seines Gurtbandes, wenigstens eine Gurtbandführung aufweist, läuft das Gurtband ständig in der ihm vorgegebenen Spur, so dass aus der Winkelstellung der Förderstrecken im Bereich der Ablenkung resultierende Kräfte, die das Fördergut seitlich verschieben, kaum noch dazu führen können, dass das Gurtband aus der Spur läuft, und dadurch einzelne Produkte aus dem Stückgutstrom unter das Gurtband geraten können.

In besonders vorteilhafter Weise ist nach einer Weiterbildung der erfindungsgemäßen Vorrichtung vorgesehen, dass jede Gurtbandführung als neben dem Laufbereich des Fördertrums angeordnete Erhöhung ausgebildet ist, wobei jede Längsseitenkante des Gurtbandes von einer Erhöhung flankiert ist.

Das Fördertrum des Gurtbandes ist somit zwischen den flankierenden Erhöhungen aufgenommen und während des Umlaufes des Gurtbandes seitlich geführt.

Vorzugsweise ist jede Erhöhung eine Längsrippe oder ein Wulst, der sich aus der Ebene der Auflage erhebt, welche unter dem Fördertrum des Gurtbandes als plattenartiges Bauteil angeordnet ist, um das fördernde Trum des Gurtbandes zu unterstützen. Es ist dadurch möglich, mit den Gurtbändern der Vorrichtung höhere Lasten zu fördern, da das Gewicht der einzelnen Produktteile des Fördergutstromes von der das Gurtband unterstützenden Auflage optimal abgefangen wird.

Die erfindungsgemäß vorgesehene Gurtbandführung kann auch durch eine Vertiefung in dem plattenartigen Bauteil gebildet sein. In der Vertiefung in Form einer Rille oder einer flachen Nut, ist das Fördertrum des Gurtbandes aufgenommen. In besonders vorteilhafter Weise ist die Vertiefung so dimensioniert, dass die freie Gurtbandoberfläche etwa bündig mit den flankierenden Erhöhungen ist, die das Gurtband seitlich führen.

Die flankierenden Erhöhungen schützen die Längsseitenkanten des Gurtbandes und verhindern, dass Teile der geförderten Produkte unter das Gurtband geraten.

Eine weitere Verbesserung der Seitenführung des Gurtbandes wird auch noch dadurch erreicht, dass das Gurtband jedes Gurtbandförderers an seiner z.B. auf dem plattenartigen Bauteil aufliegenden Unterseite wenigstens ein erhabenes Führungsorgan aufweist und dass im Laufbereich des Gurtbandes wenigstens eine Vertiefung angeordnet ist, in welcher das darin jeweils eingreifende Führungsorgan gleitsteinähnlich geführt ist.

Es können auch mehrere Führungsorgane in Reihe hintereinander an dem Gurtband angeordnet sein. Auch mehrere Reihen von Führungsorganen nebeneinander sind möglich.

Bei einer bevorzugten Ausführung ist jedes Führungsorgan als eine im Querschnitt keilähnliche Führungsleiste ausgebildet. Die Führungsleiste kann in eine Vertiefung bzw. eine Nut eingreifen, die eine entsprechend angepasste, mit der Form der Führungsleiste korrespondierende Form hat.

Die Vertiefung, die als Nut bzw. Rille vorliegt, kann z.B. durch Pressen in ein Blech geformt werden, welches die plattenartige Auflage für die Unterseite des Fördertrums des Gurtbandes des Gurtbandförderers bildet.

Die an der Unterseite des Gurtbandes befindlichen Führungsorgane können separat vorgefertigte Bauteile sein, die mit dem Gurtband durch geeignete Mittel, z.B. Kleben oder Nähen, verbunden sind. Führungsorgane sind auch an die Gurtbänder formbar bzw. gemeinsam mit den Gurtbändern ausformbar, so dass das Gurtband mit seinen Führungsorganen einteilig ausgebildet wäre.

Die Ausbildung von Vorrichtungen zum Ablenken eines Stückgutstromes aus einer Förderstrecke in der vorbeschriebenen, erfindungsgemäßen Weise, ist insbesondere dann vorteilhaft, wenn jeder Gurtbandförderer eine modulartig ausgebildete Baueinheit ist. Mehrere Baueinheiten lassen sich auf einfache Art und Weise nebeneinander zu einer den Übergabe- bzw. Abzweigbereich einer Förderstrecke bildenden Vorrichtung zusammensetzen

Ein Ausführungsbeispiel der Erfindung, aus dem sich weitere erfinderische Merkmale ergeben, ist in der Zeichnung dargestellt. Es zeigen:
- Fig. 1:: eine schematische Seitenansicht eines als modulartige Baueinheit ausgebildeten Gurtbandförderers und
- Fig. 2:: eine Ansicht des Gurtbandförderers im Schnitt entlang der Linie II-II in Fig. 1.

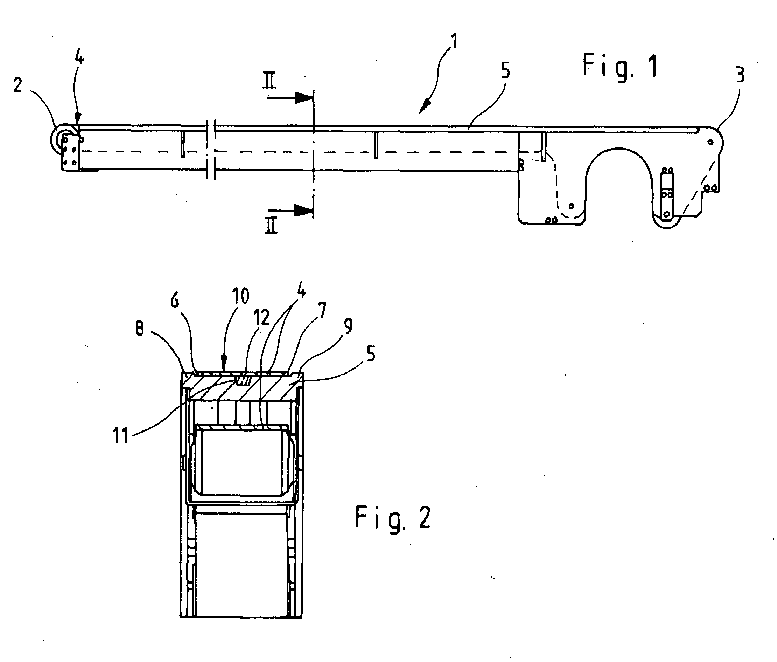

Fig. 1 zeigt eine schematische Seitenansicht eines als modulartige Baueinheit ausgebildeten Gurtbandförderers 1. Über endseitig angeordnete Umlenkrollen 2 und 3 ist ein umlaufendes Gurtband 4 geführt, wobei das Gurtband mit seinem Fördertrum im oberen Laufbereich auf einer plattenartigen Auflage 5 aufliegt. Der Umlauf des Gurtbandes 4 über Umlenkrollen ist durch eine gestrichelte Linie angedeutet.

Fig. 2 zeigt eine Ansicht im Schnitt entlang der Linie II-II in Fig. 1. Fig. 2 verdeutlicht die im Laufbereich des Fördertrums des Gurtbandes 4 angeordnete, die Unterseite des Gurtbandes unterstützende plattenartige Auflage 5. Die Längsseitenkanten 6 und 7 des Gurtbandes 4 sind von jeweils einer Erhöhung 8 bzw. 9 flankiert.

Die freie Oberfläche 10 des Gurtbandes 4 ist mit den Erhöhungen 8 und 9 bündig.

Im Laufbereich des Gurtbandes 4 ist in die plattenartige Auflage 5 eine Vertiefung 11 geformt, in die ein an der aufliegenden Unterseite des Gurtbandes 4 angeordnetes Führungsorgan 12 eingreift.

## Patentansprüche

1. Vorrichtung zur Ablenkung eines Stückgutstromes aus einer Förderstrecke, mit mehreren in einer Ebene nebeneinander fördernden Gurtbandförderern die im Ablenkbereich in einem vorbestimmten Winkel zur Förderrichtung der Förderstrecke angeordnet sind,
**dadurch gekennzeichnet,**
**dass** jeder Gurtbandförderer (1) im Laufbereich des Fördertrums seines Gurtbandes (4) wenigstens eine Gurtband-Führung aufweist.

2. Vorrichtung nach Anspruch 1, **dadurch gekennzeichnet, dass** jede Gurtbandführung als neben dem Laufbereich des Fördertrums angeordnete Erhöhung (8, 9) ausgebildet ist, wobei jede Längsseitenkante (6, 7) des Gurtbandes (4) von einer Erhöhung (8, 9) flankiert ist.

3. Vorrichtung nach einem der Ansprüche 1 und 2, **dadurch gekennzeichnet, dass** das Gurtband (4) jedes Gurtbandförderers (1) an seiner Unterseite wenigstens ein erhabenes Führungsorgan (12) aufweist und dass im Laufbereich des Gurtbandes (4) wenigstens eine Vertiefung (11) angeordnet ist, in welcher das darin jeweils eingreifende Führungsorgan (12) gleitsteinähnlich geführt ist.

4. Vorrichtung nach Anspruch 3, **dadurch gekennzeichnet, dass** jedes Führungsorgan (12) als eine im Querschnitt keilähnliche Führungsleiste ausgebildet ist.

5. Vorrichtung nach einem der Ansprüche 1 bis 4, **dadurch gekennzeichnet, dass** jeder Gurtbandförderer (1) eine modulartig ausgebildete Baueinheit ist.

## Claims

1. A device for deflecting a flow of bulk material from a conveyor path, comprising a plurality of belt conveyors, which convey next to one another in a plane and which are arranged in the deflection area at a predetermined angle to the conveying direction of the conveyor path,
**characterized in**
**that** each belt conveyor (1) comprises at least one belt guide in the running area of the conveying strand of its belt (4).

2. The device according to claim 1, **characterized in that** each belt guide is embodied as an elevation (8, 9), which is arranged next to the running area of the conveying strand, wherein each longitudinal side edge (6, 7) of the belt (4) is flanked by an elevation (8, 9) .

3. The device according to one of claims 1 and 2, **characterized in that** the belt (4) of each belt conveyor (1) comprises at least one raised guide member (12) at its lower side and that, in the running area of the belt (4), at least one recess (11) is arranged, in which the guide member (12), which engages therewith in each case, is guided in a sliding block-like manner.

4. The device according to claim 3, **characterized in that** each guide member (12) is embodied as a guide bar, which has a wedge-like cross section.

5. The device according to one of claims 1 to 4, **characterized in that** each belt conveyor (1) is a structural unit, which is embodied in a modular manner.

## Revendications

1. Dispositif de déviation d'un flux de produits au détail d'un trajet de transport avec plusieurs convoyeurs à courroie transportant côte à côte dans un même niveau, qui dans la zone de déviation sont disposés sous un angle prédéfini par rapport à la direction de transport du trajet de transport, **caractérisé en ce que** chaque convoyeur à courroie (1) comporte au moins un guide de courroie dans la zone de fonctionnement du tronçon de transport de sa courroie (4).

2. Dispositif selon la revendication 1, **caractérisé en ce que** chaque guide de courroie est conçu sous la forme d'une surélévation (8, 9) disposée à côté de la zone de fonctionnement du tronçon de transport, chaque bord de côté longitudinal (6, 7) de la courroie (4) étant flanqué d'une surélévation (8, 9).

3. Dispositif selon l'une quelconque des revendications 1 et 2, **caractérisé en ce que** la courroie (4) de chaque convoyeur à courroie (1) comporte sur sa face inférieure au moins un organe de guidage (12) convexe et **en ce que** dans la zone de fonctionnement de la courroie (4) est disposé au moins un creux (11), dans lequel l'organe de guidage (12) qui s'y engage respectivement est guidé de façon analogue à un coulisseau.

4. Dispositif selon la revendication 3, **caractérisé en ce que** chaque organe de guidage (12) est conçu sous la forme d'une baguette de guidage de section transversale analogue à une clavette.

5. Dispositif selon l'une quelconque des revendications 1 à 4, **caractérisé en ce que** chaque convoyeur à courroie (1) est une unité conçue de façon modulaire.
